# EUROPÄISCHE PATENTSCHRIFT

(11) **EP 0 726 396 B1**
(45) Veröffentlichungstag und Bekanntmachung des Hinweises auf die Patenterteilung: **23.09.1998**
(21) Anmeldenummer: 96101323.2
(22) Anmeldetag: 31.01.1996
(51) Int. Cl.: F04D 15/00, F24D 19/10

(54) **Verfahren zur Leistungsbegrenzung von elektrisch angetriebenen Heizungsumwälzpumpen**
Method for fixing the output performance limits of electrically driven central heating circulation pumps
Méthode pour délimiter la plage de fonctionnement des pompes de circulation pour systèmes de chauffage central à entraînement électrique

(30) Priorität: 09.02.1995 DE 19504232
(43) Veröffentlichungstag der Anmeldung: 14.08.1996
(73) Patentinhaber: GRUNDFOS A/S, DK-8850 Bjerringbro (DK)
(72) Erfinder: Jensen, Niels D., DK-8850 Bjerringbro (DK); Senczek, Rolf-Werner, D-24536 Neumünster (DE); Blad, Thomas, DK-8850 Bjerringbro (DK)
(74) Vertreter: Vollmann, Heiko, Dipl.-Ing.

(56) Entgegenhaltungen:
- EP-A- 0 091 869
- EP-A- 0 150 068
- EP-A- 0 279 939
- CH-A- 573 054
- DE-A- 3 824 057
- US-A- 4 518 318
- AUTOMATISIERUNGSTECHNISCHE PRAXIS - ATP, Bd. 37, Nr. 1, 1.Januar 1995, Seiten 50-56, XP000481539 KUNZ U: "TRENDS BEI DER LEISTUNGSREGELUNG VON HEIZUNGSPUMPEN"

## Beschreibung

Die Erfindung betrifft ein Verfahren zur Leistungsbegrenzung von elektromotorisch angetriebenen drehzahlsteuerbaren Heizungsumwälzpumpen, gemäß den im Oberbegriff des Anspruchs 1 angegebenen Merkmalen sowie eine Vorrichtung zur Ausführung dieses Verfahrens.

Warmwasserheizungsanlagen sind Kreislaufsysteme, deren Anlagenkennlinien H_{A} (Q) [Förderhöhe in Abhängigkeit vom Förderstrom] sich aufgrund der schwankenden Wärmeleistung und der Gewohnheiten der Benutzer ständig verändern. Besondere Bedeutung kommt dabei den heutzutage üblichen Thermostatventilen zu, die den Förderstrom in Abhängigkeit von zusätzlichen Wärmeeinflüssen, wie beispielsweise Sonneneinstrahlung, Abwärme von Geräten und Personenwärme, mehr oder weniger drosseln, wodurch sich die Anlagenkennlinien entsprechend ändern.

Um elektrische Energie beim Betrieb von Zentralheizungsanlagen einzusparen, ist inzwischen auch gesetzlich vorgeschrieben, daß zukünftig in Anlagen mit Kesselleistungen über 50 KW eingebaute Umwälzpumpen so ausgestattet oder beschaffen sein müssen, daß die elektrische Leistungsaufnahme dem betriebsbedingten Förderbedarf selbsttätig in mindestens drei Stufen angepaßt wird.

Neben den seit langem bekannten mit drei Leistungsstufen (Drosselkurven) betreibbaren Pumpen sind zwischenzeitlich auch Pumpenaggregate entwickelt und auf dem Markt gebracht worden, die einen integrierten Drehzahlsteller aufweisen und eine stufenlose Leistungsanpassung ermöglichen. Diese Aggregate können in jedem Punkt des Q-H-Feldes bis hin zur Grenzleistungskurve (Maximalkurve) des Motors betrieben werden.

Pumpenaggregate dieser Art weisen in der Praxis eine elektronische Regelung (siehe EP 0 150 068 A3) auf, bei der als Sollwerte maximale Förderhöhen H_{n max} einstellbar sind. Alternativ können auch anstelle solcher Konstantdruckkurven Proportionaldruckkurven vorgegeben werden. Die elektronische Regelung ermittelt anhand der elektrischen Werte des Motors die Ist-Werte der Pumpe und regelt auf die voreingestellten Soll-Werte nach. Derartige Pumpenaggregate werden beispielsweise von der Grundfos GmbH in 23812 Wahlstedt unter der Serienbezeichnung UPE 2000 angeboten.

Diese vielseitig einsetzbaren Pumpenaggregate, die weite Leistungsbereiche überspannen, müssen beim Einbau in die Heizungsanlage anhand der vorerwähnten Konstantdruckkurven oder Proportionaldruckkurven eingestellt werden. Die Einstellung erfolgt anhand der vorher ermittelten und zu erwartenden maximal erforderlichen Förderhöhe der Anlage.

Bei der Berechnung von Heizungsanlagen läßt sich zwar der maximal erforderliche Förderstrom recht genau errechnen, die maximal erforderliche Förderhöhe jedoch nur annähernd, da sie unter anderem auch von der Bauausführung der Anlage abhängig ist. So kann der Strömungswiderstand des Rohrleitungsnetzes in Abhängigkeit der Streckenführung und der Bauausführung der Rohrleitungen stark variieren. In der Praxis wird diesem Problem dadurch Rechnung getragen, daß bei der Berechnung der maximal erforderlichen Förderhöhe eine entsprechend hohe Sicherheitszugabe einfließt. In der Praxis führt dies dazu, daß die danach eingestellte Konstant- oder Proportionaldruckkurve regelmäßig zu hoch liegt. Dies führt wegen des dann anliegenden zu hohen Förderdrucks zu Strömungsgeräuschen in der Heizungsanlage und hat weiterhin den Nachteil, daß die Leistung des Pumpenaggregates, die letztlich dem elektrischen Versorgungsnetz entnommen wird, deutlich über der tatsächlich erforderlichen Leistung liegt. Ein weiterer für die Aufnahmeleistung des Aggregates negativer Effekt kann sich dann einstellen, wenn die Pumpe aufgrund zahlreicher geöffneter Thermostatventile nicht mehr auf der eingestellten Konstantdruckkurve bzw. Proportionaldruckkurve laufen kann, sondern auf der Grenzleistungskurve läuft. Dann kann der Förderstrom über den maximal erforderlichen Förderstrom hinaus erheblich anwachsen, wodurch die zum Antrieb der Pumpe erforderliche elektrische Leistung weiter steigt.

Hiervon ausgehend liegt der vorliegenden Erfindung die Aufgabe zugrunde, ein Verfahren zur Leistungsbegrenzung zu schaffen, daß die vorerwähnten Nachteile vermeidet und in Verbindung mit einer entsprechend ausgebildeten Regelung eine automatische und den tatsächlichen Erfordernissen entsprechende Leistungsanpassung der Pumpe ermöglicht.

Diese Aufgabe wird erfindungsgemäß durch die im kennzeichnenden Teil des Anspruchs 1 aufgeführten Merkmale gelöst. Das erfindungsgemäße Verfahren ermöglicht in praxisgerechter und einfacher Weise eine Begrenzung des Q-H-Feldes der Pumpe entsprechend den Anforderungen der Heizungsanlage, so daß im Idealfall die Pumpe nur noch mit der Leistung betrieben wird, die zum Erhalt des gerade notwendigen Förderstromes erforderlich ist. Das erfindungsgemäße Verfahren läßt sich ohne weiteres in eine automatische Regelung integrieren, wodurch ein sich auf die Betriebsparameter selbsttätig einstellendes Pumpenaggregat geschaffen wird (Anspruch 7).

Das Grundprinzip des erfindungsgemäßen Verfahrens besteht aus drei Verfahrensschritten. In einem ersten Schritt wird der maximale Förderstrom der Pumpe festgelegt, was durch eine entsprechende Einstellung am Pumpenaggregat erfolgt. Im zweiten Schritt erfolgt dann eine Festlegung der maximalen Förderhöhe der Pumpe. Diese im zweiten Schritt festgelegte Förderhöhe entspricht der Förderhöhe im Schnittpunkt des voreingestellten maximalen Förderstromes mit der Maximalkurve im Q-H-Feld oder liegt darunter. Dieser zweite Verfahrensschritt kann durch eine entsprechende Steuerung selbsttätig erfolgen oder auch durch manuelle Einstellung am Pumpenagregat. Gegebenenfalls kann auch der durch die selbsttätige Einstellung festgelegte Wert durch eine manuelle Einstellung nach unten korrigiert werden. Der dritte und gegebenenfalls beliebig oft selbsttätig wiederholbare Verfahrensschritt besteht darin, daß beim Betrieb der Pumpe die zuvor festgelegte maximale Förderhöhe auf einen niedrigeren Wert festgelegt wird, wenn bei Erreichen des eingestellten maximalen Förderstromes die zuvor festgelegte maximale Förderhöhe um ein vorgegebenes Maß unterschritten wird.

Das erfindungsgemäße Verfahren zur Leistungsbegrenzung und Betriebsoptimierung von Heizungsumwälzpumpen benötigt zunächst einmal die Festlegung und Einstellung eines maximalen Förderstromes. Der während des Betriebes der Heizungsanlage erforderliche Förderstrom, wird gleich oder kleiner als der einzustellende maximale Förderstrom der Pumpe sein. Er ist auch wesentlich genauer zu ermitteln als die zu erwartende maximal erforderliche Förderhöhe beim Betrieb der Anlage. Insofern bewirkt schon dieser erste Verfahrensschritt eine erste Anpassung des hydraulischen Leistungsfeldes der Pumpe an die Anlagenerfordernisse. Mit dem zweiten Verfahrensschritt, mit dem dann anhand des eingestellten maximalen Förderstromes sowie des Schnittpunktes dieses Förderstromes mit der Maximalkurve im Q-H-Feld, oder auch manuell, die maximale Förderhöhe festgelegt wird, erfolgt die erste vollständige Leistungsbegrenzung. In der Praxis wird der zweite Verfahrensschritt selbsttätig erfolgen, indem das Aggregat anhand des vorerwähnten Schnittpunktes eine maximale Förderhöhe der Pumpe einstellt. Liegt der rechnerisch ermittelte Wert für die maximale Förderhöhe der Anlage wesentlich tiefer als die eingestellte maximale Förderhöhe, so empfiehlt es sich dann, diesen rechnerisch ermittelten Wert der maximalen Förderhöhe manuell einzugeben.

Diesen beiden vorgenannten Verfahrensschritten liegt die Überlegung zugrunde, daß der in der Heizungsanlage erforderliche maximale Förderstrom nur dann von der Pumpe zu fördern ist, wenn der Durchflußwiderstand im System sein Minimum aufweist, das heißt alle oder im wesentlichen alle Thermostatventile geöffnet sind. Aber auch nur in diesem Betriebspunkt benötigt die Anlage den höchsten Förderdruck, so daß eine Begrenzung der maximalen Förderhöhe der Pumpe anhand des Schnittpunktes der Maximalkurve mit dem festgelegten und eingestellten maximalen Förderstrom bestimmt werden kann. Mit diesen ersten beiden Verfahrensschritten wird die Leistung der Pumpe und damit die elektrische Aufnahmeleistung des antreibenden Motors schon sehr wirksam begrenzt.

Der dritte erfindungsgemäße Schritt, bei dem dann im späteren Betrieb der Pumpe das hydraulische Leistungsfeld und damit auch das elektrische Leistungsfeld selbsttätig weiter begrenzt wird, setzt den Kerngedanken des Verfahrens fort, daß nämlich der maximale erforderliche Förderdruck (Förderhöhe) sinnvollerweise nur dann aufzubringen ist, wenn auch der maximale Förderstrom erbracht werden muß. Wenn nämlich bei Erreichen des maximalen Förderstrom sich beim Betrieb der Pumpe eine Förderhöhe einstellt, die unter der zuvor festgelegten maximalen Förderhöhe liegt, dann besagt dies, daß beim vorherigen Festlegen der maximalen Förderhöhe der Pumpe der Strömungswiderstand der Anlage noch nicht sein Minimum erreicht hatte, das heißt noch nicht alle Thermostatventile vollständig geöffnet waren, und somit die maximale Förderhöhe der Pumpe weiter verringert werden kann. Dieses Verringern der maximalen Förderhöhe der Pumpe wird zweckmäßigerweise stufenweise nach vorgegebenen (weiter unten noch im einzelnen angeführten) Kriterien erfolgen, um einerseits den Erfordernissen der Leistungsbegrenzung und damit der elektrischen Leistungsaufnahme des Pumpenaggregates gerecht zu werden und andererseits mit einer gewissen Sicherheit die Heizungsanlage auch bei Spitzenbelastung versorgen zu können. Das erfindungsgemäße Verfahren erlaubt also eine Anpassung des Leistungsfeldes der Pumpe an die sich in der Praxis ergebenden Anlagenerfordernisse, wobei der dritte Verfahrensschritt dafür sorgt, daß wenn möglich das Leistungsfeld der Pumpe hinsichtlich der maximalen Förderhöhe im Betrieb der Pumpe angepaßt wird. Diese Anpassung wird in vorteilhafterweise selbsttätig erfolgen.

Die maximale Förderhöhe der Pumpe, wie sie im zweiten und gegebenenfalls dritten Verfahrensschritt festgelegt wird kann in einfachster Form durch einen konstanten Wert, also eine Gerade im Q-H-Feld gebildet sein. Beim zweiten Verfahrensschritt würde diese Gerade beispielsweise die Maximalkurve in dem Punkt schneiden, in dem der festgelegte maximale Förderstrom diese Kurve schneidet. Vorteilhaft können jedoch anstelle solcher konstanten maximalen Förderhöhen diese auch als Funktion in Abhängigkeit des Förderstromes festgelegt werden, wie sie beispielsweise aus dem Stand der Technik als Proportionaldruckkurven bekannt sind. Bei einem solchen kurvenförmigen Verlauf der maximalen Förderhöhe wird der Maximalwert bei dem maximal festgelegten Förderstrom (im zweiten Verfahrensschritt im Schnittpunkt mit der Maximalkurve) erreicht werden. Die Kurven werden hingegen zu niedrigeren Förderströmen hin abfallen, um einerseits die Pumpleistung den Betriebsanforderungen der Heizungsanlage anzupassen und andererseits Strömungsgeräusche in der Heizungsanlage zu vermeiden.

Zur Vermeidung der vorerwähnten Strömungsgeräusche, die stets dann auftreten, wenn die Pumpe mit hohem Druck und geringeren Förderstrom fördert, also wenn die Heizungsanlage im unteren Teillastbereich arbeitet und ein Teil der Thermostatventile ganz oder teilweise geschlossen sind, wird das Leistungsfeld der Q-H-Kurve vorteilhaft durch eine weitere, im folgendem als Minimalkurve bezeichnete Kurve begrenzt. Diese Minimalkurve geht von einer minimalen Förderhöhe Hₘᵢₙ bei einem Förderstrom von Q = 0 aus und schneidet die Maximalkurve in einem Bereich, in dem das Verhältnis zwischen tatsächlichen Förderstrom Q und optimalen bzw. maximalen Förderstrom Qₒₚₜ zwischen 0,25 und 0,5 liegt. Hierdurch wird das Leistungsfeld der Q-H-Kurve durch eine schräg nach oben verlaufende Gerade begrenzt, was nicht nur die Leistungsaufnahme des Pumpenaggregates im Bereich kleiner Förderströme vermindert, sondern auch zugleich Strömungsgeräusche in den Rohrleitungen vermeidet.

Bevorzugt wird der dritte Verfahrensschritt, bei dem die maximale Förderhöhe der Pumpe auf eine niedrigere maximale Förderhöhe festgelegt wird, dahingehend ausgebildet, daß dieser Korrekturvorgang der maximalen Förderhöhe nach unten, der wie schon eingangs erwähnt nur bei maximalem Förderstrom im Betrieb der Pumpe durchgeführt wird, nur dann erfolgt, wenn die tatsächliche Förderhöhe der Pumpe die zuvor festgelegte maximale Förderhöhe um mindestens 10% unterschreitet. Die dann festzulegende niedrigere maximale Förderhöhe wird zwischen der tatsächlichen Förderhöhe und der zuvor festgelegten maximalen Förderhöhe liegen, bevorzugt auf dem Mittelwert zwischen diesen beiden Förderhöhen. Diese Verfahrensvariante hat den Vorteil, daß die maximale Förderhöhe unabhängig von der Größe des Absolutwertes stets mit einem relativen Abstand zur tatsächlich ermittelten Förderhöhe eingestellt wird, um so eine gewisse Sicherheit dahingehend zu schaffen, daß das Pumpenaggregat trotz dieses Leistungsanpassungs- bzw. Optimierungsverfahrens stets gewisse Leistungsreserven behält. Aufgrund der relativen Anpassung können die Leistungsreserven bei Anlagen die eine vergleichsweise kleine Pumpenleistung erfordern geringer sein als bei solchen, die eine große Pumpenleistung erfordern.

Eine vorteilhafte Weiterbildung des erfindungsgemäßen Verfahrens besteht darin, daß der Temperaturgradient des geförderten Fluids ermittelt wird, so daß auf diese Weise die bei heutigen Heizungsanlagen übliche Nachtabsenkung der Vorlauftemperatur erfaßt und die Pumpenleistung daran angepaßt wird. Die Anpassung erfolgt dadurch, daß der im ersten Verfahrensschritt festgelegte maximale Förderstrom für die Zeit der Temperaturabsenkung, also den Nachtbetrieb der Heizungsanlage, um ein vorgegebenes Maß vermindert wird. Hierdurch wird berücksichtigt, daß im Falle der Nachtabsenkung nicht nur die Heizleistung, sondern auch die Pumpleistung vermindert werden kann. Ein weiterer Vorteil dabei ist, daß eine weitere Reduzierung der Strömungsgeräusche innerhalb der Heizungsanlage aufgrund der verminderten Pumpenleistung erfolgt. Diese Strömungsgeräusche machen sich insbesondere im Nachtbetrieb der Heizungsanlage, wenn es in der Regel ruhig ist, besonders störend bemerkbar. Wird die Vorlauftemperatur der Heizungsanlage am Morgen durch die Regelung wieder angehoben, so wird dies durch den sich ändernden Temperaturgradienten festgestellt und der ursprüngliche höhere maximale Förderstrom der Pumpe wieder eingestellt bzw. festgelegt. Um die Leistungsanpassung des Pumpenaggregates auf den wesentlichen, das heißt den Tagbetrieb zu konzentrieren werden die Verfahrensschritte zwei und drei bei der Absenkung des maximalen Förderstromes zweckmäßigerweise gesperrt, das heißt, daß während der Förderstromabsenkung aufgrund der Temperaturabsenkung innerhalb der Heizungsanlage keine Absenkung der maximalen Förderhöhe der Pumpe erfolgt.

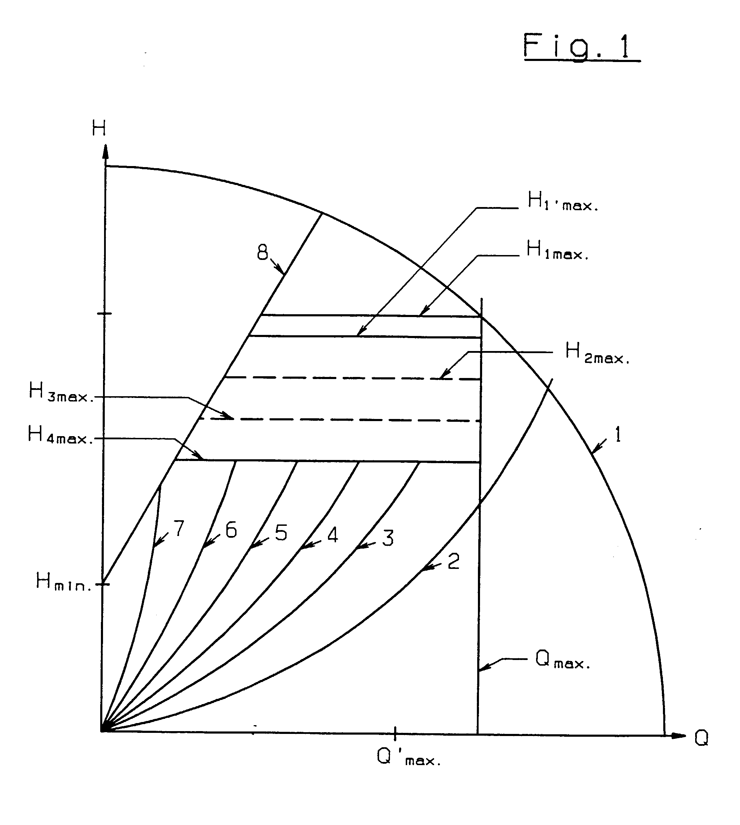

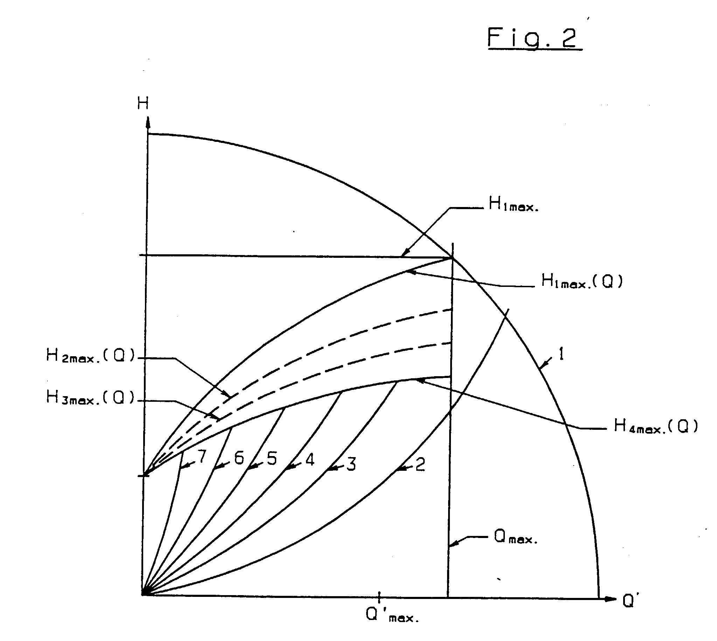

Das erfindungsgemäße Verfahren ist nachfolgend anhand von zwei Ausführungsbeispielen beschrieben, deren Q-H-Diagramme in den Fign. 1 und 2 dargestellt sind.

In den Q-H-Diagrammen ist auf der Abszisse der Förderstrom Q und auf der Ordinatenachse die Förderhöhe H aufgetragen. Die Maximalkurve ist in den Figuren mit 1 gekennzeichnet, sie gibt die maximale hydraulische Leistung des Pumpenaggregates an und begrenzt das hydraulische Leistungsfeld nach oben. Wie man dieser Maximalkurve 1 entnehmen kann, wird die größtmögliche Förderhöhe auf dieser Maximalkurve dann erreicht, wenn der Förderstrom gleich 0 ist. Umgekehrt kann der größtmögliche Förderstrom dann erreicht werden, wenn die Förderhöhe 0 beträgt. Das elektromotorisch angetriebene und drehzahlsteuerbare Heizungsumwälzpumpenaggregat kann in jedem Punkt unter dieser Maximalkurve 1 betrieben werden.

Weiter sind in den Figuren insgesamt sechs Anlagenkennlinien eingezeichnet. Diese sechs Anlagekennlinien stehen beispielhaft für eine unendliche Vielzahl von Anlagenkennlinien, die sich je nach Durchflußwiderstand der Heizungsanlage, also nach Stellung der Thermostatventile ergeben können.

Der erste Verfahrensschritt besteht nun darin, entsprechend den Vorausberechnungen einen maximalen Förderstrom Qₘₐₓ festzulegen und am Pumpenaggregat einzustellen, so daß sich eine das Leistungsfeld der Pumpe im Q-H-Feld begrenzende zur Ordinatenachse parallele Qₘₐₓ-Linie ergibt. Dort, wo diese Qₘₐₓ-Linie die Maximalkurve 1 schneidet, ergibt sich, wenn keine Vorgabe einer anderen Förderhöhe erfolgt, eine erste maximale Förderhöhe H_{1 max}. In diesem Schnittpunkt der Qₘₐₓ-Linie mit der Maximalkurve 1 liegt zugleich der Punkt der maximalen Pumpenleistung. Es ist nicht sinnvoll, die Förderhöhe über diesen Punkt hinaus ansteigen zu lassen, da sich dann ohnehin ein kleinerer Förderstrom als der maximale Förderstrom Qₘₐₓ einstellt. Es ist jedoch bekannt, daß sich der Förderstrom nur dann verringert, wenn Thermostatventile der Heizungsanlage teilweise oder ganz geschlossen sind, also die Heizungsanlage im Teillastbetrieb arbeitet. Im Teillastbetrieb bedarf es jedoch einer pumpenseitigen Korrektur des Förderstromes zu größeren Förderströmen hin nicht, da dies durch die Regelfunktion der Thermostatventile erfüllt wird, dadurch, daß diese bei zu geringer Heizleistung weiter öffnen und sich damit die Anlagenkennlinie beispielsweise von 6 auf 5 ändert. Dies bedeutet jedoch, daß sich bei gleicher Förderhöhe ein höherer Förderstrom einstellt. Aus diesen Überlegungen heraus wird im Schnittpunkt der Qₘₐₓ-Linie mit der Maximalkurve 1 bei dem anhand von Fig. 1 dargestellten Verfahren eine maximale Förderhöhe H_{1 max} der Pumpe festgelegt, die in Fig. 1 durch eine abszissenparallele H_{1 max}-Linie dargestellt ist. Das Leistungsfeld der Pumpe ist nunmehr durch die Linien Qₘₐₓ und H_{1 max} begrenzt. Diese erste Begrenzung erfolgt unabhängig vom Betrieb der Pumpe nach den beispielsweise rechnerisch ermittelten Daten der Heizungsanlage.

Zweckmäßigerweise wird am Pumpenaggregat nicht nur ein maximaler Förderstrom Qₘₐₓ einstellbar sein, sondern auch eine maximale Förderhöhe H_{1' max}. Wenn sich nämlich ergibt, daß die im Schnittpunkt der Qₘₐₓ-Linie mit der Maximalkurve 1 sich ergebende Förderhöhe H_{1 max} deutlich größer ist als die vorberechnete zu erwartende maximal erforderliche Förderhöhe H_{1'max}beim Betrieb der Heizungsanlage, dann ist es zweckmäßig, diesen Wert H_{1 max} manuell auf den berechneten Wert H_{1' max} abzusenken. Es kann dann der im dritten Verfahrensschritt nachfolgend beschriebenen automatischen Absenkung der maximalen Förderhöhe vorgegriffen werden, was in der Praxis beispielsweise dann von Vorteil ist, wenn die Heizungsanlage im Sommer in Betrieb genommen wird, wenn zahlreiche Thermostatventile aufgrund äußerer Wärmeinflüsse relativ weit geschlossen sind.

Der dritte Verfahrensschritt, bei dem die maximale Förderhöhe der Pumpe an die Heizungsanlage angepaßt wird, erfolgt beim Betrieb der Pumpe. Für eine Absenkung der maximalen Förderhöhe der Pumpe müssen zwei Voraussetzungen erfüllt sein. Zum einem muß im Betrieb der zuvor im ersten Verfahrensschritt festgelegte maximale Förderstrom Qₘₐₓ erreicht sein. Wenn dann die tatsächliche Förderhöhe H der Pumpe einen Wert erreicht, der 20% unterhalb der zuvor festgelegten maximalen Förderhöhe H_{1 max} liegt, dann erfolgt selbsttätig eine Absenkung der maximalen Förderhöhe auf H_{2 max}. H_{2 max} entspricht 90% von H_{1 max}. Wird nun auch bei dieser abgesenkten maximalen Förderhöhe H_{2 max} bei maximalem Förderstrom Qₘₐₓ wiederum die tatsächliche Förderhöhe H der Pumpe um 20% unterschritten, so wird die maximale Förderhöhe selbsttätig auf einen Wert H_{3 max} begrenzt, der wiederum 90% von H_{2 max} entspricht. In dem anhand von Fig. 1 dargestellten Beispiel ist schließlich noch eine weitere Absenkung auf H_{4 max} in analoger Weise erfolgt. Das Leistungsfeld der Pumpe ist somit durch die Linie H_{4 max}-Linie und die Qₘₐₓ-Linie begrenzt. Dieses Leistungsfeld bietet aufgrund der Absenkung in relativen Stufen stets ausreichende Leistungsreserven für die Heizungsanlage und stellt bei vergleichsweiser geringer Pumpenleistung und somit auch geringer Aufnahme elektrischer Leistung die sichere Versorgung der Heizungsanlage bis zur Vollast hin sicher.

Um Strömungsgeräusche in der Heizungsanlage zu vermeiden, die insbesondere dann auftreten, wenn die Pumpe gegen weitgehend geschlossene Thermostatventile fördert, wird das Leistungsfeld weiterhin durch eine Minimalkurve 8 begrenzt, welche die Ordinatenachse bei Hₘᵢₙ schneidet und die Maximalkurve 1 bei einem Wert schneidet, bei dem der tatsächliche Förderstrom Q 40% des maximalen Förderstromes Qₘₐₓ entspricht.

Weiterhin ist in Fig. 1 ein Förderstrom Q'ₘₐₓ eingezeichnet, der für den Nachtbetrieb vorgesehen ist, wenn die Vorlauftemperatur abgesenkt wird und ein Betrieb der Heizungsanlage unter Vollast mit Sicherheit nicht zu erwarten ist. Wie anhand von Fig. 1 ersichtlich, wird auf diese Weise während des Nachtbetriebes das Leistungsfeld der Pumpe weiter zu kleineren Leistungen hin begrenzt. Während dieser Phase, in der der maximale Förderstrom der Pumpe auf Q'ₘₐₓ begrenzt ist, erfolgt keine weitere Absenkung der maximalen Förderhöhe. Um Leitungsverbindungen zur Regelung der Heizungsanlage und elektrische Anpassungen an diese Regelung zu vermeiden, erfolgt die Erfassung der Nachttemperaturabsenkung durch Ermittlung des Temperaturgradienten des geförderten Fluids, wobei geeignete Grenzwerte festgelegt werden, die vermeiden, daß bei den im Tagbetrieb üblicherweise auftretenden Temperaturschwankungen eine Umschaltung erfolgt. Es wird also bei Erreichen eines vorgegebenen negativen Wertes des Temperaturgradienten der zuvor festgelegte maximale Förderstrom Qₘₐₓ auf einen verringerten maximalen Förderstrom Q'ₘₐₓ herabgesetzt und umgekehrt bei Erreichen eines vorgegebenen positiven Wertes des Temperaturgradienten wieder zurückgesetzt.

Die Verfahrensschritte zwei und drei sowie das Festlegen einer Minimalkurve 8 können durch eine entsprechende elektronische Regelung der Pumpe automatisch erfolgen, es ist also lediglich vor Betrieb der Pumpe der maximale Förderstrom Qₘₐₓ an dieser einzustellen und festzulegen, wonach die Regelung selbsttätig die maximalen Förderhöhen H_{1 max} sowie nachfolgend im Betrieb Hₙₘₐₓ ermittelt und festlegt. Entsprechendes gilt für die Begrenzung des Leistungsfeldes durch die Minimalkurve 8 sowie für die Absenkung des maximalen Förderstromes im Nachtbetrieb in der Anlage. Das Adaptionsverfahren kann beschleunigt werden, wenn zusätzlich zu Qₘₐₓ auch die näherungsweise vorher rechnerisch ermittelte maximale Förderhöhe H_{1' max} eingegeben wird, die unter H_{1 max} liegen muß.

Die anhand von Fig. 2 dargestellte Verfahrensvariante unterscheidet sich von dem anhand von Fig. 1 vorbeschriebenen Verfahren dadurch, daß anstelle der dort festgesetzten konstanten Förderhöhen H_{n max} Proportionaldruckkurven H_{n max} (Q) festgelegt werden, wodurch eine weichere Anpassung des Leistungsfeldes der Pumpe an die Anlagenerfordernisse erfolgt, und zwar im Teillastbereich. In Fig. 2 ist beispielhaft die Linie H_{1 max} aus Fig. 1 dargestellt, die verdeutlichen soll, daß der zweite und dritte Verfahrensschritt prinzipiell in gleicher Weise wie vorbeschrieben erfolgen, daß jedoch die Abstufung nur für den maximalen Förderstrom Qₘₐₓ gilt, im übrigen jedoch den aus Fig. 2 ersichtlichen Kurvenverlauf aufweist. Dadurch kann auf das Vorgeben einer Minimalkurve vollständig verzichtet werden. Es versteht sich, daß auch bei diesem Verfahren die Verfahrensschritte 2 und 3 zur Absenkung der maximalen Förderhöhe selbsttätig durch die Regelung des Aggregates erfolgen.

## Patentansprüche

1. Verfahren zur Leistungsbegrenzung von elektromotorisch angetriebenen drehzahlsteuerbaren Heizungsumwälzpumpen, deren hydraulisches Leistungsfeld durch eine Maximalkurve (1) im Q-H-Feld begrenzt ist, wobei Q den Förderstrom und H die Förderhöhe darstellen,
- bei dem zunächst ein maximaler Förderstrom (Qₘₐₓ) der Pumpe festgelegt wird,
- bei dem dann eine unter dem Schnittpunkt der Maximalkurve (1) mit dem festgelegten maximalen Förderstrom (Qₘₐₓ) liegende oder diesem entsprechende maximale Förderhöhe (H_{1 max}) der Pumpe festgelegt wird,
dadurch gekennzeichnet,
- daß beim Betrieb der Pumpe, wenn die tätsächliche Förderhöhe (H) die zuvor festgelegte maximale Förderhöhe (H_{1 max} bzw. H_{n max}) bei Erreichen des festgelegten maximalen Förderstromes (Qₘₐₓ) um ein vorgegebenes Maß unterschreitet, selbsttätig eine entsprechend niedrigere maximale Förderhöhe (H_{n+1 max}) festgelegt wird.

2. Verfahren nach Anspruch 1, dadurch gekennzeichnet, daß anstelle einer konstanten maximalen Förderhöhe (H_{n max}) eine maximale Förderhöhe (H_{n max}=f(Q))in Form einer Funktion in Abhängigkeit des Förderstromes (Q) festgelegt wird.

3. Verfahren nach einem der vorhergehenden Ansprüche, dadurch gekennzeichnet, daß das unter der Q-H-Kurve liegende Leistungsfeld durch eine Minimalkurve (8) begrenzt wird, die von einer minimalen Förderhöhe (Hₘᵢₙ) bei einem Förderstrom (Q) von Q = 0 ausgeht und die Maximalkurve (1) bei 0,25 ≤ Q/Qₒₚₜ ≤ 0,5 schneidet.

4. Verfahren nach einem der vorhergehenden Ansprüche, dadurch gekennzeichnet, daß die maximale Förderhöhe (H_{n max}) nur dann auf eine niedrigere maximale Förderhöhe (H_{n+1 max}) festgelegt wird, wenn die tatsächliche Förderhöhe (H) der Pumpe die zuvor festgelegte maximale Förderhöhe (H_{n max}) bei maximalem Förderstrom (Qₘₐₓ) um mindestens zehn Prozent unterschreitet, wobei die niedrigere maximale Förderhöhe (H_{n+1 max}) auf einen Wert zwischen der tatsächlichen Förderhöhe (H) und der zuvor festgelegten maximalen Förderhöhe (H_{n max}) festgelegt wird, bevorzugt auf den Mittelwert.

5. Verfahren nach einem der vorhergehenden Ansprüche, dadurch gekennzeichnet, daß der Temperaturgradient des geförderten Fluids ermittelt wird, daß beim Betrieb der Pumpe mit maximalem Förderstrom (Qₘₐₓ) und bei Erreichen eines vorgegebenen negativen Wertes des Temperaturgradienten der zuvor festgelegte maximale Förderstrom (Qₘₐₓ) um ein vorgegebenes Maß (auf Q'ₘₐₓ) vermindert wird und daß bei Erreichen eines vorgebenen positiven Wertes des Temperaturgradienten der maximale Förderstrom ( von Q'ₘₐₓ) auf den ursprünglichen höheren Wert (Qₘₐₓ) zurückgesetzt wird.

6. Verfahren nach einem der vorhergehenden Ansprüche, dadurch gekennzeichnet, daß während der Zeit, in der der maximale Förderstrom aufgrund des negativen Temperaturgradienten des geförderten Fluids abgesenkt ist, keine Absenkung der maximalen Förderhöhe erfolgt.

7. Vorrichtung zur Ausführung des Verfahrens nach einem der vorhergehenden Ansprüche, bei der eine Eingabeeinrichtung vorgesehen ist, über die ein maximaler Förderstrom (Qₘₐₓ) der Pumpe festlegbar ist,
und bei der Mittel vorgesehen sind, die anhand des Schnittpunktes der Maximalkurve mit dem festgelegten maximalen Förderstrom (Qₘₐₓ) selbsttätig eine maximale Förderhöhe (H_{1 max}) der Pumpe festlegen, dadurch gekennzeichnet, daß weitere Mittel vorgesehen sind, die beim Betrieb der Pumpe dann, wenn die tatsächliche Förderhöhe der Pumpe die zuvor festgelegte maximale Förderhöhe (H_{1 max} bzw. H_{n max}) bei Erreichen des festgelegten maximalen Förderstromes (Qₘₐₓ) um ein vorgegebenes Maß unterschreitet, selbsttätig eine entsprechend niedrigere maximale Förderhöhe (H_{n+1 max}) festlegen.

8. Vorrichtung nach Anspruch 7, dadurch gekennzeichnet, daß eine weitere Eingabevorrichtung vorgesehen ist, über die eine maximale Förderhöhe (H_{1' max}) festlegbar ist.

## Claims

1. A method for limiting the power of electromotorically driven, rotary speed controllable, heating circulatory pumps, whose hydraulic output field is limited by a maximum curve (1) in the Q-H field, wherein Q represents the delivery flow and H the delivery head,
- with which firstly a maximum delivery flow (Qₘₐₓ) of the pump is fixed,
- with which then a maximum delivery head (H_{1 max}) of the pump, which lies below the point of intersection of the maximum curve (1) with the fixed maximum delivery flow (Qₘₐₓ) or which corresponds to this, is fixed,
characterised in
- that on operation of the pump when the actual delivery head (H) on reaching the fixed maximum delivery flow (Qₘₐₓ) falls below the previously fixed maximum delivery head (H_{1 max} or H_{n max}) by a certain measure, automatically a correspondingly lower maximum delivery head (H_{n+1 max}) is fixed.

2. A method according to claim 1, characterised in that instead of a constant maximum delivery head (H_{n max}) a maximum delivery head (H_{n max} =f(Q)) in the form of a function depending on the delivery flow (Q) is fixed.

3. A method according to one of the preceding claims, characterised in that the output field lying below the Q-H-curve is limited by a minimum curve (8) which proceeds from a minimum delivery head (Hₘᵢₙ) with a delivery flow (Q) of Q = 0 and intersects the maximum curve (1) at 0.25 ≤ Q/Qₒₚₜ ≤ 0.5.

4. A method according to one of the preceding claims, characterised in that the maximum delivery head (H_{n max}) is only fixed to a lower maximum delivery head (H_{n+1 max}) when the actual delivery head (H) of the pump at the maximum delivery flow (Qₘₐₓ) falls short of the previously fixed maximum delivery head (H_{n max}) by at least 10%, wherein the lower maximum delivery head (H_{n+1 max}) is fixed at a value between the actual delivery head (H) and the previously fixed maximum delivery head (H_{n max}), preferably at the mean value.

5. A method according to one of the preceding claims, characterised in that the temperature gradient of the delivered fluid is determined, that on operation of the pump with a maximum delivery flow (Qₘₐₓ) and on reaching a predetermined negative value of the temperature gradient, the previously fixed maximum delivery flow (Qₘₐₓ) is reduced by a predetermined measure (to Q'ₘₐₓ) and that on reaching a predetermined positive value of the temperature gradient the maximum delivery flow is set hack (from Q'ₘₐₓ) to the originally higher value (Qₘₐₓ).

6. A method according to one of the preceding claims, characterised in that during the time in which the maximum delivery flow is reduced on account of the negative tempereture gradient of the delivered fluid, there is effected no reduction of the maximum delivery head.

7. A device for carrying out the method according to one of the preceding claims, with which an input means is provided via which a maximum delivery flow (Qₘₐₓ) of the pump may be set,
and with which means are provided which, by way of the point of intersection of the maximum curve with the fixed maximum delivery now (Qₘₐₓ), automatically fix a maximum delivery head (H_{1 max}) of the pump, characterised in that further means are provided which on operation of the pump, when the actual delivery head of the pump on reaching the fixed maximum delivery flow Qₘₐₓ falls short of the previously fixed maximum delivery head (H_{1 max} or H_{n max}) by a predetermined measure, automatically fixes a correspondingly lower maximum delivery head (H_{n+1 max}).

8. A device according to claim 7, characterised in that a further input device is provided via which a maximum delivery head (H_{1'max}) may be fixed.

## Revendications

1. Procédé pour délimiter la plage de fonctionnement des pompes de circulation pour systèmes de chauffage central à entraînement électrique et à vitesse réglable, dont le champ de puissance hydraulique est limité par une courbe maximale (1) dans le champ Q-H, Q et H représentant respectivement le débit et la hauteur de refoulement,
- avec lequel on définit d'abord un débit maximum (Qₘₐₓ) de la pompe,
- avec lequel on définit ensuite une hauteur de refoulement (H_{1 max}) maximale de la pompe qui se situe au-dessous du point d'intersection de la courbe maximale (1) avec le débit (Qₘₐₓ) maximum défini ou qui correspond à celui-ci ,
caractérisé en ce que ,
- lors du fonctionnement de la pompe, lorsqu'on atteint le débit (Qₘₐₓ) maximum défini, une hauteur de refoulement (H_{n+1 max}) maximale correspondante et inférieure est définie automatiquement, si la hauteur de refoulement (H) réelle reste inférieure d'une marge prédéfinie à la hauteur de refoulement (H_{1 max} ou H_{n max}) maximale définie auparavant.

2. Procédé selon la revendication 1, caractérisé en ce que, au lieu d'une hauteur de refoulement (H_{n max}) maximale constante, on définit une hauteur de refoulement (H_{n max} = f(Q)) maximale sous la forme d'une fonction en fonction du débit (Q).

3. Procédé selon l'une quelconque des revendications précédentes, caractérisé en ce que le champ de puissance situé au-dessous de la courbe Q-H est délimité par une courbe minimale (8), qui part d'une hauteur de refoulement (Hₘᵢₙ) minimale pour un débit (Q) de Q=0 et coupe la courbe maximale (1) à 0,25 ≤ Q/Qₒₚₜ ≤ 0,5.

4. Procédé selon l'une quelconque des revendications précédentes, caractérisé en ce que la hauteur de refoulement (H_{n max}) maximale est définie à une hauteur de refoulement (H_{n+1 max}) maximale inférieure seulement dans les cas où la hauteur de refoulement (H) réelle de la pompe est inférieure d'au moins 10% à la hauteur de refoulement (H_{n max}) maximale définie auparavant pour un débit (Qₘₐₓ) maximum, la hauteur de refoulement (H_{n+1 max}) maximale inférieure étant fixée à une valeur comprise entre la hauteur de refoulement (H) réelle et la hauteur de refoulement (H_{n max}) maximale définie auparavant, de préférence à la valeur moyenne.

5. Procédé selon l'une quelconque des revendications précédentes, caractérisé en ce que le gradient de température du fluide transporté est déterminé, en ce que le débit (Qₘₐₓ) maximum défini auparavant est réduit d'une proportion prédéfinie (jusqu'à Q'ₘₐₓ) lorsque la pompe fonctionne avec le débit (Qₘₐₓ) maximum et lorsqu'on atteint une valeur négative prédéfinie du gradient de température et en ce que le débit maximum (Q'ₘₐₓ) est ramené à la valeur (Qₘₐₓ) supérieure initiale lorsqu'on atteint une valeur positive prédéfinie du gradient de température.

6. Procédé selon l'une quelconque des revendications précédentes, caractérisé en ce que l'on n'a pas de baisse de la hauteur de refoulement maximale pendant le temps où le débit maximum a baissé en raison du gradient de température négatif du fluide transporté.

7. Dispositif pour l'application du procédé selon l'une quelconque des revendications précédentes, avec lequel il est prévu un système d'entrée par lequel on peut définir un débit (Qₘₐₓ) maximal de la pompe, et avec lequel sont prévus des moyens qui définissent automatiquement une hauteur de refoulement (H_{1 max}) maximale de la pompe à l'aide du point d'intersection de la courbe maximale avec le débit (Qₘₐₓ) maximum défini, caractérisé en ce qu'il est prévu d'autres moyens qui définissent automatiquement une hauteur de refoulement (_{Hn+1 max}) maximale correspondante inférieure lors du fonctionnement de la pompe, lorsqu'on atteint le débit (Qₘₐₓ) maximum défini, dans les cas où la hauteur de refoulement réelle de la pompe est inférieure d'une marge prédéfinie à la hauteur de refoulement (H_{1 max} ou H_{n max}) maximale définie auparavant.

8. Dispositif selon la revendication 7, caractérisé en ce qu'il est prévu un autre système d'entrée par lequel on peut définir une hauteur de refoulement (H_{1' max}) maximale.
